# EUROPÄISCHE PATENTANMELDUNG

(11) **EP 4 501 436 A1**
(43) Veröffentlichungstag der Anmeldung: **05.02.2025**
(21) Anmeldenummer: 23020364.8
(22) Anmeldetag: 02.08.2023
(51) Int. Cl.: B01D 53/22, F25B 43/00

(54) **VERFAHREN ZUM ENTFERNEN EINER UNERWÜNSCHTEN KOMPONENTE AUS EINEM VERDICHTERKREISLAUF**

(71) Anmelder: Linde GmbH, 82049 Pullach (DE)
(72) Erfinder: Schiffmann, Patrick, 82049 Pullach (DE); Dick, Alexander, 82049 Pullach (DE); Twardokus, Peter, 82049 Pullach (DE)
(74) Vertreter: Zahn, Christoph

(57) **Zusammenfassung**

Die Erfindung betrifft ein Verfahren zum Entfernen wenigstens einer unerwünschten Komponente aus dem Medium eines geschlossenen Verdichterkreislaufs, in dem mittels einer ein- oder mehrstufigen Verdichtung (V) ein Medium verdichtet, entspannt, angewärmt oder abgekühlt und erneut der Verdichtung (V) zugeführt wird. Erfindungsgemäß wird zumindest zeitweilig, zumindest ein Teilstrom des verdichteten Mediums (3) permeativ (M) in einen an der unerwünschten Komponente angereicherten Permeatstrom (4), der aus dem Verdichterkreislauf abgezogen wird, und einen an der unerwünschten Komponente abgereicherten Retentatstrom (5) aufgetrennt und der Retentatstrom (5) vor oder in die Verdichtung (V) zurückgeführt.

## Beschreibung

Die Erfindung betrifft ein Verfahren zum Entfernen wenigstens einer unerwünschten Komponente aus dem Medium eines geschlossenen Verdichterkreislaufs, in dem mittels einer ein- oder mehrstufigen Verdichtung ein Medium verdichtet, entspannt, angewärmt oder abgekühlt und erneut der Verdichtung zugeführt wird.

Geschlossene Verdichterkreisläufe kommen bei einer Vielzahl von Prozessen zur Anwendung, bspw. bei Erdgasverflüssigungsprozessen. Unter einem geschlossenen Verdichterkreislauf ist nachfolgend ein Prozess zu verstehen, bei dem ein Gas oder Gasgemisch mittels einer ein- oder mehrstufigen Verdichtung auf den gewünschten Kreislaufdruck verdichtet, auf der Hochdruckseite einem Prozess zugeführt, kälteleistend entspannt, gegen wenigstens einen abzukühlenden Strom des Prozesses angewärmt oder abgekühlt und anschließend wieder zur Saugseite der Verdichtung zurückgeführt wird. Abhängig vom Anwendungszweck kommen Reinstoffe, wie bspw. Kohlenwasserstoffe, Inertgase, Gase oder Gasgemische im Verdichterkreislauf zur Anwendung. Die verwendeten Gasgemische sind meist für ein definiertes Betriebsszenario optimiert und müssen ggf., bspw. in Abhängigkeit von der Umgebungstemperatur, angepasst werden, um den Prozess bzw. die Anlage im Optimum betreiben zu können. Nachfolgend steht der Begriff Medium für einen Reinstoff oder ein Gasgemisch. Nicht zu vermeidende, geringe Sperrgasverluste werden mittels einer externen Gasquelle kompensiert.

Kommt es zu einer ungewollten Verunreinigung eines Reinstoffes oder Gasgemisches, bspw. durch eine Leckage oder zur Anpassung des Gasgemisches des Verdichterkreislaufs, wird gemäß dem Stand der Technik Gas(gemisch) oder kondensiertes Gas(gemisch) aus dem Verdichterkreislauf im Regelfall zum Fackelsystem gegeben und entfernt. Im Falle von ungefährlichen Gasen ist auch ein Entlüften an die Atmosphäre möglich. Unter einer Leckage ist im Folgenden ein Einströmen einer oder mehrerer ungewollter Komponenten aus einem Prozessstrom mit höheren Druckniveau in den Verdichterkreislauf mit niedrigeren Druckniveau gemeint. Da ein selektives Entfernen einzelner unerwünschter Komponenten durch das vorbeschriebene Vorgehen nicht möglich ist, gehen auch erwünschte Komponenten des Mediums verloren, die dem Verdichterkreislauf deshalb wieder zugeführt werden müssen. In den meisten Fällen muss ein erhebliches Kreislaufinventar entfernt werden, um die Verunreinigung auf ein akzeptables Maß zu senken bzw. um das Gasgemisch den veränderten Rahmenbedingungen anzupassen.

Der derzeitige Ansatz, das Inventar des Verdichterkreislaufs anzupassen, erfordert es, vergleichsweise große Mengen an Kreislaufinventar aus dem Verdichterkreislauf zu entfernen. Da ein selektives Entfernen einzelner Komponenten nicht möglich ist, gehen auch erwünschte, wertvolle Komponenten verloren, was zu erheblichen Fackelmengen führt. Diese erwünschten Komponenten müssen anschließend ersetzt werden, was eine ausreichende Bereitstellung dieser Komponenten erfordert. Falls unerwünschte Komponenten durch interne Prozessleckage fortwährend in den Verdichterkreislauf gelangen, ist ein kontinuierliches Abfackeln notwendig, um die Verunreinigungen kontinuierlich zu entfernen. Zudem muss dem Verdichterkreislauf kontinuierlich die ebenfalls entzogene(n), erwünschte(n) Komponente(n) zugeführt werden, woraus vergleichsweise hohe Betriebskosten resultieren. Alternativ kann die Anlage außerhalb eines geplanten Wartungsintervals angehalten, drucklos gemacht und inertisiert werden, bevor die Leckage behoben werden kann. Anschließend muss die Anlage für das Wiederanfahren vorbereitet werden, was unter anderem Spülen, Inertisieren und Befüllen des Verdichterkreislaufs erfordert, gefolgt von der Wiederanfahrprozedur der Anlage, die eine Verzögerung von mehreren Wochen verursachen kann, bis die volle Produktion wieder erreicht ist.

**Aufgabe** der vorliegenden Erfindung ist es, ein gattungsgemäßes Verfahren zum Entfernen wenigstens einer unerwünschten Komponente aus dem Medium eines geschlossenen Verdichterkreislaufs anzugeben, das die vorgenannten Nachteile vermeidet.

Zur **Lösung** dieser Aufgabe wird ein gattungsgemäßes Verfahren zum Entfernen wenigstens einer unerwünschten Komponente aus dem Medium eines geschlossenen Verdichterkreislaufs vorgeschlagen, das dadurch gekennzeichnet ist, dass zumindest zeitweilig, zumindest ein Teilstrom des verdichteten Mediums permeativ in einen an der unerwünschten Komponente angereicherten Permeatstrom, der aus dem Verdichterkreislauf abgezogen wird, und einen an der unerwünschten Komponente abgereicherten Retentatstrom aufgetrennt wird und der Retentatstrom vor oder in die Verdichtung zurückgeführt wird.

Weitere **vorteilhafte Ausgestaltungen** des erfindungsgemäßen Verfahrens zum Entfernen wenigstens einer unerwünschten Komponente aus dem Medium eines geschlossenen Verdichterkreislaufs sind Gegenstände der abhängigen Patentansprüche.

Ist nunmehr die Zusammensetzung des Mediums des Verdichterkreislaufs anzupassen, wird erfindungsgemäß zumindest ein Teilstrom des verdichteten Mediums permeativ in einen an der unerwünschten Komponente angereicherten Permeatstrom und einen an der unerwünschten Komponente abgereicherten Retentatstrom aufgetrennt. Dieses Auftrennen erfolgt in wenigstens einer Membraneinheit. Entsprechend der abzutrennenden unerwünschten Komponente werden Membrantyp und damit die Selektivität gewählt. Der an der unerwünschten Komponente angereicherte Permeatstrom wird aus dem Verdichterkreislauf abgezogen, während der an der unerwünschte Komponente abgereicherte Retentatstrom wieder zur Saugseite des Verdichters oder, abhängig vom Druckniveau, zwischen zwei Stufen eines mehrstufigen Verdichters geleitet wird. Während die Membraneinheit in Betrieb ist, wird die zu entfernende, unerwünschte Komponente im Verdichterkreislauf abgereichert. Da auch andere, erwünschte Komponenten in geringem Umfang von der Membran entfernt werden, müssen diese Komponenten dem Verdichterkreislauf als sog. Make-up-Komponenten zugeführt werden. Aufgrund des erfindungsgemäßen Verfahrens verringert sich die zuzuführende Menge an Make-up-Komponenten im Vergleich zu der vorbeschriebenen Verfahrensweise der Anpassung mittels Fackeln.

Sofern mehrere unerwünschte Komponenten aus dem Verdichterkreislauf entfernt werden sollen, werden, falls die Komponenten nicht mit einem Membrantyp abgetrennt werden können, verschiedene Membrantypen installiert und in Betrieb genommen, entsprechend ihrer Selektivität und der zu entfernenden Komponenten. Nach dem Abschluss der Anpassung des Mediums des Verdichterkreislaufs kann die Membraneinheit wieder außer Betrieb genommen werden.

Es ist möglich, dass eine unerwünschte Komponente im Medium des Verdichterkreislaufs angereichert wird, bspw. durch ein leckendes Ventil oder durch eine Prozessleckage aus einem Hochdrucksystem des Prozesses in den Verdichterkreislauf. Sobald die Anreicherung der unerwünschten Komponente festgestellt wird, wird das verdichtete Medium nach dem Verdichter teilweise entnommen und zur Membraneinheit geleitet. Der Membrantyp und seine Selektivität werden in Abhängigkeit von der potenziellen Prozessleckage und der zu entfernenden Verunreinigung gewählt. Die Verunreinigungskomponente wird im Permeatstrom angereichert und aus dem Verdichterkreislauf entfernt, während der Retentatstrom zur Saugseite des Verdichters bzw. einer Verdichterzwischenstufe zugeführt wird. So lange die Membraneinheit in Betrieb ist, werden die Verunreinigungen kontinuierlich aus dem Verdichterkreislauf entfernt, sodass eine außerplanmäßige Abschaltung des Verdichterkreislaufs und damit des Prozesses zur Behebung der Prozessleckage nicht erforderlich ist. Ggf. erforderliche Reparaturarbeiten können während der geplanten Wartungsarbeiten durchgeführt werden.

Das erfindungsgemäße Verfahren zum Betreiben eines geschlossenen Verdichterkreislaufs ermöglicht die selektive Entfernung einzelner unerwünschter Komponenten aus dem in einem Verdichterkreislauf zirkulierenden Medium, wenn eine Anpassung der Zusammensetzung des Mediums oder die Entfernung von Verunreinigungen aus dem Medium erforderlich ist. Dies führt zu einem geringeren Abfackeln und einem niedrigeren Verbrauch an Make-up-Komponenten, was wiederum den CO₂-Fußabdruck des Verdichterkreislaufs sowie den Verbrauch von Betriebshilfsstoffen, wie den vorgenannten Make-up-Komponenten, und damit die Betriebskosten reduziert. Ferner können mittels des erfindungsgemäßen Verfahrens ungeplante Anlagenabschaltungen im Falle kleinerer Prozessleckagen in den Verdichterkreislauf vermieden werden, da die Verunreinigungen von der Membraneinheit bis zu den geplanten Wartungsarbeiten entfernt werden können. Produktionsausfälle über mehrere Tage können dadurch vermieden werden.

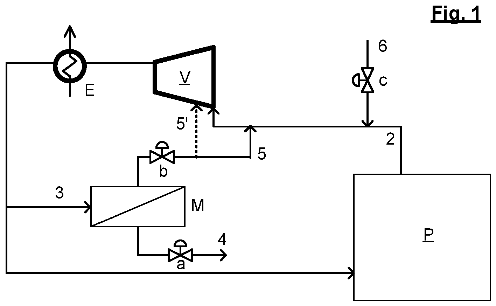

Das erfindungsgemäße Verfahren sowie weitere vorteilhafte Ausgestaltungen desselben seien nachfolgend anhand der in der **Figuren 1 bis 5** dargestellten beispielhaften Ausführungsformen näher erläutert.

Die **Figur 1** zeigt den Grundgedanken des erfindungsgemäßen Verfahrens. Bei diesem wird das im geschlossenen Verdichterkreislauf zirkulierende Medium ein- oder mehrstufig verdichtet V, vorzugsweise gegen ein externes Kältemedium zur Abführung der Verdichtungswärme abgekühlt E und über Leitung 1 auf der Hochdruckseite einem Prozess P, bspw. einem Erdgasverflüssigungsprozess zugeführt. Nach erfolgter Entspannung und anschließender Erwärmung oder Abkühlung des Mediums in diesem Prozess P wird es über Leitung 2 zur Saugseite des Verdichters V zurückgeführt. Die Verdichtung kann grundsätzlich ein- oder mehrstufig erfolgen. Auch können mehrere Verdichter seriell und/oder parallel angeordnet sein.

Sofern es nunmehr erforderlich ist, selektiv einzelne, unerwünschte Komponenten aus dem im Verdichterkreislauf zirkulierenden Medium zu entfernen, wird erfindungsgemäß zumindest zeitweilig, zumindest ein Teilstrom des verdichteten Mediums 3 einer Membrantrenneinheit M zugeführt. Entsprechend der aus dem Medium abzutrennenden Komponente(n) sind der Membrantyp und damit die Selektivität zu wählen. Der in der Membrantrenneinheit M gewonnene Permeatstrom 4, der eine höhere Konzentration an der unerwünschten Komponente aufweist, wird über Ventil 4 aus dem Verdichterkreislauf abgezogen und ggf. abgefackelt, an die Atmosphäre abgegeben oder in eine andere Prozesseinheit geleitet. Der an der unerwünschten Komponente abgereicherte Retentatstrom 5 wird erfindungsgemäß vor den Verdichter V oder im Falle eines mehrstufigen Verdichters V wenigstens einer Verdichterzwischenstufe zugeführt 5`. Die in den Figuren 1 bis 5 dargestellten Ventile a bis m dienen jeweils der Mengen- und/oder Druckregelung der entsprechenden Ströme.

Über Leitung 6 wird dem Medium, vorzugsweise vor der Verdichtung V, zumindest zeitweilig ein ein- oder mehrkomponentiger Gasstrom zugeführt, wobei die Menge und/oder die Zusammensetzung dieses Gasstromes so gewählt werden, dass er die in dem Verdichterkreislauf fehlende(n) Komponente(n), die über den Permeatstrom 4 verloren gehen, ersetzt.

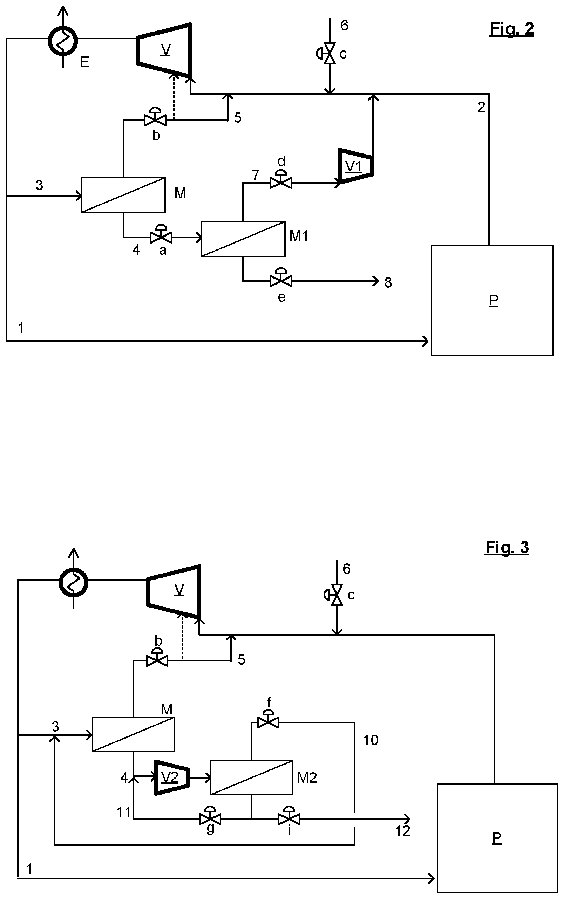

Die **Figur 2** zeigt eine Ausführungsform des erfindungsgemäßen Verfahrens, bei der der an der unerwünschten Komponente angereicherte Permeatstrom 4 in einer weiteren Membrantrenneinheit M1 in einen zweiten Permeatstrom 8 und einen zweiten Retentatstrom 7 aufgetrennt wird und der zweite Retentatstrom 7 vor oder in die Verdichtung V zurückgeführt wird, während der zweite Permeatstrom 8 aus dem Verdichterkreislauf abgezogen wird. Ggf. muss der zweite Retentatstrom 7 vor seiner Zumischung zu dem Medium verdichtet werden V1. Alternativ dazu kann der Permeatstrom 4 vor der zweiten Membran M1 auf ein Druckniveau verdichtet werden, das eine ausreichende Trennung und/oder ein Wiedereinspeisen des Retentatstroms 7 der zweiten Membranstufe in den Verdichterkreislauf ermöglicht. Mittels dieser Verfahrensführung kann der Verlust von erwünschten Komponenten, die nicht aus dem Verdichterkreislauf entfernt werden sollen, reduziert und somit die Rückgewinnungsrate dieser Komponenten erhöht werden. Erkauft wird dies jedoch mit höheren Investitionskosten, da eine zweite Membrantrenneinheit M1 vorzusehen ist.

Die in der **Figur 3** dargestellte Ausführungsform des erfindungsgemäßen Verfahrens ist eine Abwandlung der in der Figur 2 dargestellten Ausführungsform und zeigt ebenfalls eine weitere Membrantrenneinheit M2, in der der an der unerwünschte Komponente angereicherte Permeatstrom 4 in einen zweiten Permeatstrom 11, 12 und einen zweiten Retentatstrom 10 aufgetrennt wird. Der zweite Retentatstrom 10 wird vor die erste permeative Trennstufe M zurückgeführt, während zumindest ein Teilstrom des zweiten Permeatstroms 11 vor die zweite permeative Trennstufe M2 zurückgeführt und ein weiterer Teilstrom dieses Permeatstroms 12 abgezogen wird. Bei dieser Verfahrensführung ist eine Verdichtung V2 des Permeatstroms 4 vorzusehen. Der Verdichter V2 bringt die Mischung der beiden Permeatströme 4 und 11 auf ein Druckniveau, das eine ausreichende Auftrennung in der zweiten Membranstufe M2 ermöglicht und/oder das ein Wiedereinspeisen des Retentatstroms 10 in den der ersten Membran M zugeführten Strom 3 ermöglicht.Bei dieser Ausführungsform handelt es sich um eine Variante der Ausführungsform gemäß Figur 2, die gewählt wird, um in Abhängigkeit des der ersten Membran M zugeführten Mediums 3, die gewünschte Abreicherung der unerwünschten Komponente im Retentatstrom 5 zu ermöglichen, wobei die Verluste der erwünschten Komponenten über den Teilstrom 12 minimiert werden.

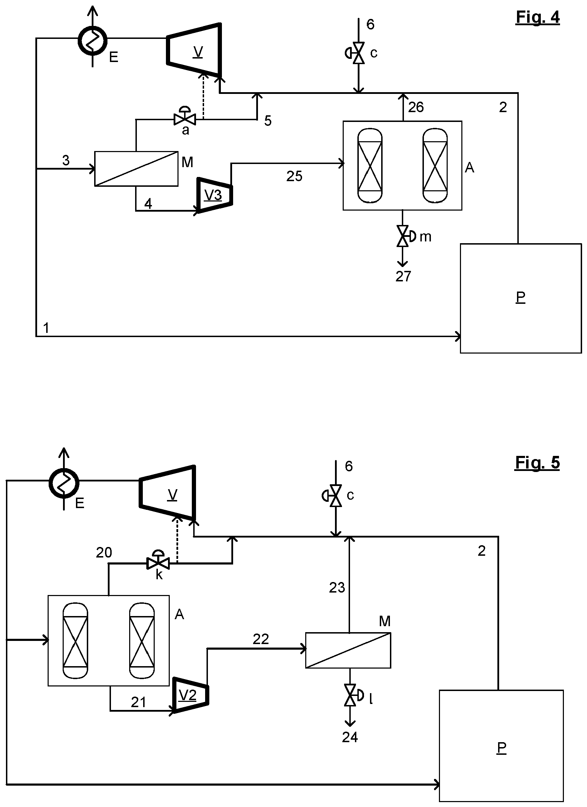

Die **Figur 4** zeigt eine weitere Ausführungsform des erfindungsgemäßen Verfahrens, bei der der an der unerwünschten Komponente angereicherte Permeatstrom 4, 25 adsorptiv A, vorzugsweise mittels eines Druckwechseladsorptionsprozesses, in einen an der erwünschten Komponente angereicherten Strom 26, der vor oder in die Verdichtung (V) zurückgeführt wird, und einen an der unerwünschten Komponente angereicherten Strom 27 aufgetrennt wird. Hierbei wird der an der unerwünschten Komponente angereicherte Permeatstrom 4, 25 vor der Zuführung in die adsorptive Auftrennung A vorzugsweise verdichtet V3. Der aus der adsorptiven Auftrennung A abgezogene, an der unerwünschten Komponente angereicherte Strom 27 wird aus dem Verfahren abgezogen. Diese Ausführungsform des erfindungsgemäßen Verfahrens ist dazu eignet, die Verluste der erwünschten Komponenten zu minimieren. Die Trennung des verdichteten Permeatstroms 25 mittels Adsorption erfolgt sehr selektiv, wodurch im Produktstrom 26 kaum noch unerwünschte Komponenten enthalten sind. Um ein (effizientes) Abtrennen der unerwünschten Komponenten innerhalb der Adsorption erst zu ermöglichen, ist es notwendig, die unerwünschte Komponente durch die vorgeschaltete Membran M im Permeatstrom 4 anzureichern.

In der **Figur 5** ist eine Ausführungsform des erfindungsgemäßen Verfahrens dargestellt, bei der der Teilstrom des verdichteten Mediums 3, der der permeativen Auftrennung M zugeführt wird, zunächst adsorptiv A, vorzugsweise mittels eines Druckwechseladsorptionsprozesses, in einen an der erwünschten Komponente abgereicherten Strom 20, der vor oder in die Verdichtung V zurückgeführt wird, und einen an der unerwünschten Komponente angereicherten Strom 21 aufgetrennt wird. Letzterer wird verdichtet V2 und anschließend 22 der Membrantrenneinheit (M) zugeführt. Der an der unerwünschten Komponente abgereicherte Retentatstrom 23 wird vor oder in die Verdichtung V zurückgeführt, während der an der unerwünschten Komponente angereicherte Strom 24 aus dem Verfahren abgezogen wird. Durch die adsorptive Auftrennung A kann die unerwünschte Komponente mit hoher Selektivität abgetrennt werden. Das Produktgas 20 ist somit nahezu frei an der unerwünschten Komponente. Das für die Reinigung der Adsorber notwendige Spülgas wird dem Adsorptionsprozess entnommen und ist mit der unerwünschten Komponente angereichert. Durch die nachgeschaltete Membran M wird das angereicherte Spülgas 22 in einen mit der unerwünschten Komponente stark angereicherten Permeatstrom 24 getrennt und dem Prozess entzogen. Der Anteil an erwünschten Komponenten im Permeatstrom 24 ist somit sehr gering, wodurch deren Verluste minimiert werden. Die erwünschten Komponenten werden über den Retentatstrom 23 dem Verdichterkreislauf wieder zugeführt.

## Patentansprüche

1. Verfahren zum Entfernen wenigstens einer unerwünschten Komponente aus dem Medium eines geschlossenen Verdichterkreislaufs, in dem mittels einer ein- oder mehrstufigen Verdichtung (V) ein Medium verdichtet, entspannt, angewärmt oder abgekühlt und erneut der Verdichtung (V) zugeführt wird, **dadurch gekennzeichnet, dass** zumindest zeitweilig, zumindest ein Teilstrom des verdichteten Mediums (3) permeativ (M) in einen an der unerwünschten Komponente angereicherten Permeatstrom (4), der aus dem Verdichterkreislauf abgezogen wird, und einen an der unerwünschten Komponente abgereicherten Retentatstrom (5) aufgetrennt wird und der Retentatstrom (5) vor oder in die Verdichtung (V) zurückgeführt wird.

2. Verfahren nach Anspruch 1, **dadurch gekennzeichnet, dass** dem Verdichterkreislauf, vorzugsweise vor der Verdichtung (V), zumindest zeitweilig ein ein- oder mehrkomponentiger Gas- oder Flüssigstrom (6) zugeführt wird, wobei Menge und/oder Zusammensetzung dieses Gas- oder Flüssigstromes (6) so gewählt werden, dass er die in dem Verdichterkreislauf fehlende bzw. fehlenden Komponenten ersetzt.

3. Verfahren nach Anspruch 1 oder 2, **dadurch gekennzeichnet, dass** der an der unerwünschten Komponente angereicherte Permeatstrom (4) permeativ (M1) in einen zweiten Permeatstrom (8) und einen zweiten Retentatstrom (7) aufgetrennt wird und der zweite Retentatstrom (7) vor oder in die Verdichtung (V) zurückgeführt wird.

4. Verfahren nach Anspruch 3, **dadurch gekennzeichnet, dass** der an der unerwünschten Komponente angereicherte Permeatstrom (4) und/oder der zweite Retentatstrom (7) vor seiner Zuführung in die Verdichtung (V) verdichtet werden.

5. Verfahren nach Anspruch 1 oder 2, **dadurch gekennzeichnet, dass** der an der unerwünschten Komponente angereicherte Permeatstrom (4)permeativ (M2) in einen zweiten Permeatstrom (11, 12) und einen zweiten Retentatstrom (10) aufgetrennt wird und der zweite Retentatstrom (10) vor die erste permeative Trennstufe (M) zurückgeführt wird.

6. Verfahren nach Anspruch 5, **dadurch gekennzeichnet, dass** ein Teilstrom des zweiten Permeatstroms (11) vor die zweite permeative Trennstufe (M2) zurückgeführt wird.

7. Verfahren nach einem der vorstehenden Ansprüche, **dadurch gekennzeichnet, dass** der an der unerwünschten Komponente angereicherte Permeatstrom (4, 25) adsorptiv (A) in einen an der erwünschten Komponente angereicherten Strom (26) und einen an der unerwünschten Komponente angereicherten Strom (27) aufgetrennt wird und der an der erwünschten Komponente angereicherte Strom (26) vor oder in die Verdichtung (V) zurückgeführt wird, wobei der Permeatstrom (4) vor der adsorptiven Auftrennung (A) vorzugsweise verdichtet wird (V3).

8. Verfahren nach Anspruch 7, **dadurch gekennzeichnet, dass** der an der unerwünschten Komponente angereicherte Permeatstrom (4, 25) vor der Zuführung in die adsorptive Auftrennung (A) verdichtet wird (V3).

9. Verfahren nach einem der vorstehenden Ansprüche, **dadurch gekennzeichnet, dass** der Teilstrom des verdichteten Mediums (3), der der permeativen Auftrennung (M) zugeführt wird, zunächst adsorptiv (A) in einen an der erwünschten Komponente angereicherten Strom (20), der vor oder in die Verdichtung (V) zurückgeführt wird, und einen an der unerwünschten Komponente angereicherten Strom (21) aufgetrennt und dieser der permeativen Auftrennung (M) zugeführt wird.
